# EUROPÄISCHE PATENTSCHRIFT

(11) **EP 0 773 382 B1**
(45) Veröffentlichungstag und Bekanntmachung des Hinweises auf die Patenterteilung: **07.03.2001**
(21) Anmeldenummer: 96116667.5
(22) Anmeldetag: 05.11.1996
(51) Int. Cl.: F16D 3/84

(54) **Schutzvorrichtung für eine Gelenkwelle mit radialer Unterstützung des Schutztrichters**
Protective device for articulated shafts with radial support of the protective funnel
Dispositif de protection pour un arbre articulé avec support radial d'entonnoir protecteur

(30) Priorität: 08.11.1995 DE 19541512
(43) Veröffentlichungstag der Anmeldung: 14.05.1997
(73) Patentinhaber: GKN Walterscheid GmbH, 53797 Lohmar (DE)
(72) Erfinder: Herchenbach, Paul, 53809 Ruppichteroth (DE); Kretschmer, Horst, Dipl.-Ing., 51145 Köln (DE)
(74) Vertreter: Harwardt, Günther, Dipl.-Ing.

(56) Entgegenhaltungen:
- DE-A- 3 013 791
- FR-A- 2 507 266
- GB-A- 2 079 886
- GB-A- 2 121 137

## Beschreibung

Die Erfindung betrifft eine Schutzvorrichtung, die für eine Gelenkwelle bestimmt ist, die zwei Kreuzgelenke, die jeweils zwei Gelenkgabeln und ein beide gelenkig verbindendes Zapfenkreuz umfassen, sowie eine beide Kreuzgelenke verbindende und entlang einer Längsachse sich erstreckende Verbindungswelle aufweist, umfassend zwei Anschlußkappen, die jeweils zur Festlegung eines Schutztrichters ein Sitzabschnitt aufweisen und zur Aufnahme eines Gleitringes dienen, der zur Lagerung auf einer Gelenkgabel bestimmt ist, wobei der Schutztrichter aus einem Kunststoff besteht und einen Abschnitt mit Falten aufweist, der dazu bestimmt ist, das Kreuzgelenk ausgehend von der Anschlußkappe zumindest über einen Teil der Längenerstreckung zu überdecken, und wobei Stützmittel vorhanden sind, welche einer Einwirkung einer Belastung von außen auf den Schutztrichter und damit einer Berührung des Schutztrichters mit den umschlossenen Bauteilen des Kreuzgelenkes entgegenwirken.

Eine solche Schutzvorrichtung ist in der DE 30 26 135 C1 beschrieben. Dabei können jedoch nur begrenzt Radialkräfte, die von außen auf den Schutztrichter einwirken, abgefangen werden, da der Stützring auf der Außenseite des Schutztrichters angebracht ist und durch diesen unmittelbar von außen festgelegt ist. Durch die Anbringung an der Außenseite des Schutztrichters kann es bei hohen Belastungen trotzdem noch zur Berührung des Schutztrichters mit Gelenkbauteilen kommen, was zur Zerstörung des Trichters führen kann.

In der DE 29 12 939 C2 ist eine Schutzvorrichtung beschrieben, bei der auf der Innenseite des Schutztrichters im Bereich eines Faltentales ein Lagerring angebracht ist. Der Lagerring ist geteilt ausgebildet und umfaßt einen feststehenden Abschnitt, der am Schutztrichter im Faltental festgelegt ist, und einen dazu relativ drehbaren Innenring. Bei Belastung des Schutztrichters von außen verformt sich dieser und der Innenring legt sich gegen eines der Bauteile, beispielsweise die Außenseite der Gelenkgabel des davon umgebenen Gelenkes an. Da jedoch Gelenkwellen für den Einsatz im landwirtschaftlichen Bereich einer starken Schmutzeinwirkung unterworfen sind, ist die Lagerfunktion nicht gewährleistet und es kommt zur Zerstörung des Ringes.

Zur besseren Abschmierbarkeit des von dem Schutztrichter abgedeckten Gelenkes und der Lagerstelle der Schutzvorrichtung auf einer Gelenkgabel des Gelenkes ist es erforderlich, daß der Schutztrichter bei Durchführung der Wartungsarbeiten abgezogen werden kann. Wie dies erreicht wird, ist in der DE 32 08 541 C1 beschrieben. Ein solches axiales Abziehen wird jedoch durch eine Anordnung nach einem Stand der Technik nach der DE 30 26 135 C2 behindert.

Ferner ist bei dem Stand der Technik nach der DE 29 12 939 C2 und der DE 30 26 135 C1 von Nachteil, daß die dort vorgesehenen zur radialen Stützung des Schutztrichters dienenden Bauteile die axiale Verformbarkeit des Schutztrichters beeinträchtigen. Eine solche axiale Verformbarkeit ist in Grenzen erforderlich, um die Gelenkwelle beispielsweise mit der Zapfwelle eines Traktors zu verbinden, denn die vom Schutztrichter abgedeckten Gelenkbauteile müssen soweit zugänglich sein, daß sie ergriffen werden können und die drehfeste und axial gesicherte Verbindung mit der Zapfwelle hergestellt werden kann.

Die GB 2 079 886 A betrifft eine Schutzvorrichtung für Gelenkwellen zum Einsatz in landwirtschaftlichen Antrieben, mit einer Schutzkappe, die einen ersten Abschnitt zur Anbringung eines Schutzrohres an einem Ende, einen zweiten Abschnitt zur Aufnahme eines Gleitringes, mit der die Schutzvorrichtung auf der Gelenkgabel eines Kreuzgelenkes lagerbar ist, und am anderen Ende einen kegelförmig erweiterten Sitzabschnitt zur Befestigung eines Schutztrichters aufweist, der mittels eines Sicherungsringes auf dem Sitzabschnitt gehalten wird.

Des weiteren ist in der DE-AS 22 05 798 für eine Manschette zum Abdichten eines Gleichlaufdrehglenkes beschrieben, die zwischen einem äußeren Gelenkteil und einer Welle abdichtende Manschette zusätzlich auf einem Ansatz eines Käfigs des Gleichfdrehgelenkes zu befestigen, so daß die dadurch entstehenden beiden Abschnitte der Manschette jeweils nur den halben Beugewinkel zwischen dem äußeren Gelenkteil und der Welle durchmessen müssen. Solche Manschetten sind zur Abdichtung des Gleichlaufdrehgelenkes gedacht und rotieren mit dem Gelenk. Sie dienen nicht als Berührungsschutz, sondern zur Einkapselung des zur Schmierung des Gelenkes vorgesehenen Schmierfettes. Die zusätzliche Befestigung dient außerdem dazu, die auf die Manschette einwirkenden Kräfte, die aus dem mitrotierenden Schmierfettresultieren, besser abzufangen.

Der Erfindung liegt die Aufgabe zugrunde, eine Schutzvorrichtung für eine Gelenkwelle im landwirtschaftlichen Einsatz vorzuschlagen, bei der eine wirksame Stützung des Schutztrichters in radialer Richtung beim Einwirken von Kräften von außen auf den Schutztrichter erzielt wird, welche zumindest den Anschluß der Gelenkwelle an ein treibendes Glied, beispielsweise die Zapfwelle eines Traktors, zuläßt, indem der Schutztrichter um ein bestimmtes Maß axial verformbar ausgelegt werden kann, ohne daß jedoch hiervon dessen Unterstützung gegen radiale Verformung beeinträchtigt wird.

Diese Aufgabe wird erfindungsgemäß dadurch gelöst, daß der Schutztrichter zur Anschlußkappe hin einen Abschnitt aufweist, der mit Falten versehen ist, daß die Stützmittel einen Stützring umfassen, dessen Außenumfangsfläche zur Stützung der Innenseite der Faltentäler der Falten des Schutztrichters dient, und daß der Stützring mit axialem Abstand auf der Längsachse von der Anschlußkappe weg versetzt angeordnet und an diese angeschlossen ist.

Durch die Zuordnung der Stützmittel zu einem Stützring, der mit der Anschlußkappe verbunden ist, wird, was von Vorteil ist, die Abstützung im Schutztrichter bewirkt, das heißt der Schutztrichter kann sich an den Stützring radial anlegen, ohne mit den Bauteilen des von ihm überdeckten Gelenkes auch bei hohen radialen Belastungen von außen in Berührung zu kommen. Darüber hinaus ist durch die Zuordnung des Stützringes zur Anschlußkappe eine unmittelbare Einleitung der Stützkräfte über die Anschlußkappe in ein Gelenk gewährleistet. Beim Einwirken von Kräften auf den Stützring wirkt die Anschlußkappe über die Lagerung auf der Gelenkgabel und über die angeschlossenen Schutzrohre dem dadurch erzeugten Kippmoment entgegen, denn auch die dem anderen Ende der Gelenkwelle zugeordnete Anschlußkappe mit ihrer Lagerung unterstützt die Abstützung.

Ein weiterer Vorteil ist darin begründet, daß der Schutztrichter ensprechend dem Verformungsweg, der erforderlich ist, um die abgedeckten Gelenkbauteile zur Verbindung mit einer treibenden oder getriebenen Welle zugänglich zu machen, entsprechend verformungsgünstig in axialer Richtung ausgestaltet werden kann.

Um zu erreichen, daß auch bei leichter Bauweise eine hohe Festigkeit und günstige Abstützung für den Stützring erzielt wird, kann dieser mittels Speichen, die um die Längsachse herum verteilt angeordnet sind, mit der Anschlußkappe verbunden sein. Hiermit ist auch gleichzeitig der Vorteil verbunden, daß über den Zwischenraum, der jeweils zwischen zwei Speichen gebildet ist, nach dem Abziehen des Schutztrichters die Schmierstellen des Gelenkes für das Abschmieren des Zapfenkreuzes und für das Schiebeprofil zugänglich sind.

Zur Erzielung eines entsprechenden Leichtbaus ist ferner vorgesehen, daß der Stützring in einer Schnittebene, welche die Längsachse enthält, mit einem Wandungsverlauf in Form eines liegenden U-Profils ausgebildet ist und zwischen den Schenkeln und dem Steg des U-Profils umfangsverteilt um die Längsachse Versteifungsstege angebracht sind. In Ausgestaltung hierzu ist vorgesehen, daß zumindest einige der Speichen selbst Versteifungsstege bilden.

Es ist ferner möglich, daß neben der Außenfläche des Stützringes auch ein Teil der Außenkontur der Speichen zur Stützung des Schutztrichters herangezogen wird.

Ferner ist in weiterer Konkretisierung der Erfindung vorgesehen, daß der Schutztrichter zur Anschlußkappe hin einen Abschnitt aufweist, der mit Falten versehen ist, und der Stützring und/oder die Außenkontur der Speichen zur Stützung der Innenseite der Faltentäler der Falten dient.

Mit der erfindungsgemäßen Gestaltung ist es möglich, daß der Stützring, die Speichen und die Anschlußkappe einstückig als Kunststoff-Spritzgußteil ausgebildet sind. Als Kunststoff kommt vorzugsweise ein HDPE (Polyäthylen hoher Dichte) in Frage.

Eine bevorzugte Ausführungsform der Erfindung, deren Anwendung auf eine Gelenkwelle für die Verwendung zum Antrieb von oder in Antrieben von Landmaschinen ist in der Zeichnung schematisch dargestellt.

Es zeigt
- Figur 1: einen Halblängsschnitt durch eine landwirtschaftliche Gelenkwelle mit einer Schutzvorrichtung nach der Erfindung,
- Figur 2: das in Figur 1 links dargestellte Gelenk mit Anschlußkappe und Stützring als Einzelheit im vergrößerten Maßstab im Verhältnis zu Figur 1,
- Figur 3: einen Teil der Schutzkappe gemäß Figur 2 mit dem Stützring als Einzelteil in einer Schnittebene III-III gemäß Figur 4 und
- Figur 4: einen Schnitt IV-IV gemäß Figur 3.

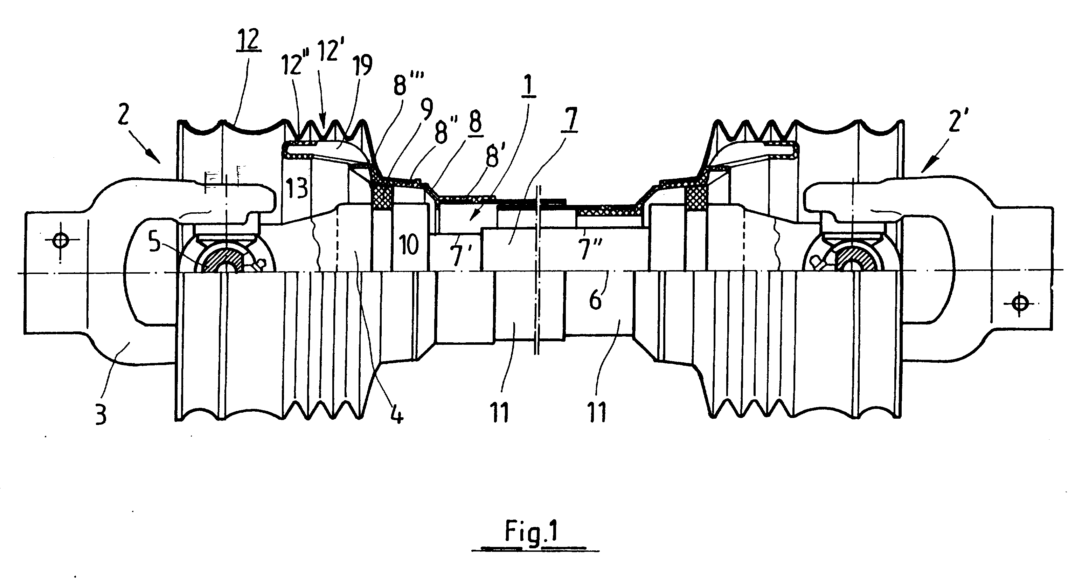

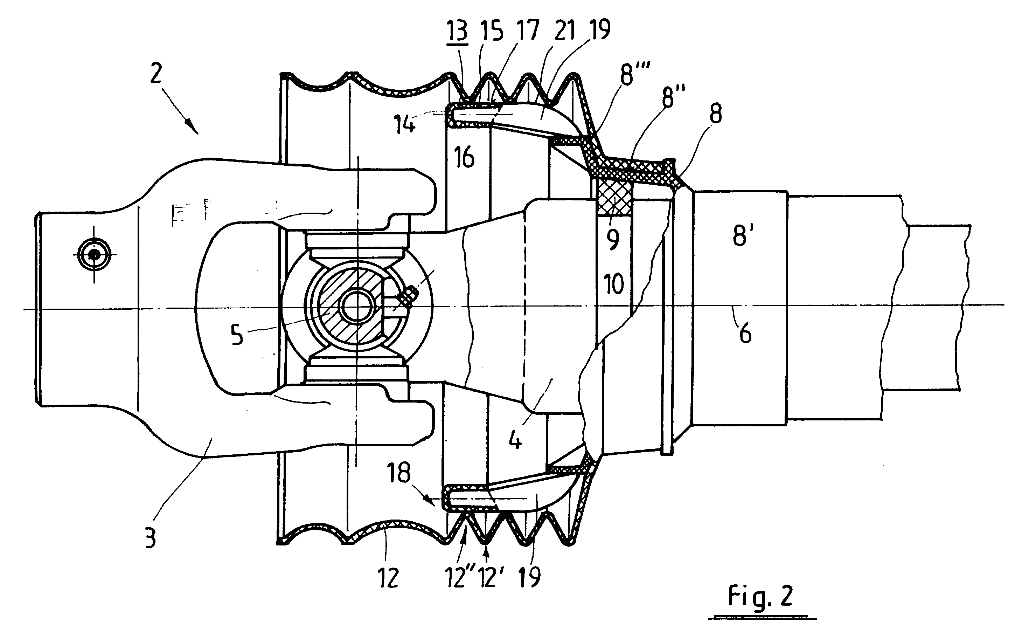

Aus Figur 1 ist die Gelenkwelle 1 mit den beiden Kreuzgelenken 2, 2' an den beiden Enden ersichtlich. Die beiden Kreuzgelenke 2, 2' sind im wesentlichen identisch ausgebildet, daher wird nur eines der Kreuzgelenke, nämlich das in Figur 1 links dargestellte Kreuzgelenk 2 näher beschrieben. In diesem Zusammenhang wird auch auf die Figur 2 verwiesen. Das Kreuzgelenk 2 umfaßt die beiden Gelenkgabeln 3, 4, die über das Zapfenkreuz 5 gelenkig miteinander verbunden sind. Die beiden Kreuzgelenke 2, 2' sind durch eine Verbindungswelle 7 miteinander verbunden. Die Verbindungswelle 7 besteht aus zwei ineinandergesteckten und teleskopierbaren Profilrohren 7', 7'', die eine Drehmomentübertragung zwischen den beiden Kreuzgelenken 2, 2' zulassen.

In der Zeichnungsfigur 1 ist die Gelenkwelle 1 in der gestreckten Lage, mit der Längsachse 6 gezeigt, die die Rotationsachse bei Drehmomentübertragung zwischen beiden Gelenken 2, 2' darstellt.

Die beiden Profilrohre 7', 7'' weisen einen vom Kreisquerschnitt abweichenden Querschnitt zur Drehmomentübertragung auf. Jeweils ein Profilrohr 7' bzw. 7'' ist mit dem zugehörigen Gelenk 2 bzw. 2' verbunden.

Der Gelenkwelle 1 ist eine Schutzvorrichtung zugeordnet, die dazu dient, zu verhindern, daß bei rotierender Gelenkwelle 1 eine Bedienungsperson mit dieser in Berührung kommen kann. Die Schutzvorrichtung umfaßt jeweils eine Anschlußkappe 8 je Kreuzgelenk 2, 2'. Wie insbesondere aus der Darstellung in Figur 1 zum Gelenk 2 bzw. aus Figur 2 ersichtlich, weist die Anschlußkappe 8 einen Rohranschluß 8' für ein äußeres Schutzrohr 11 auf. Das darin eingesteckte zweite Schutzrohr 11' ist mit der Anschlußkappe des zweiten Kreuzgelenkes 2' verbunden. Ferner besitzt die Anschlußkappe 8 einen Sitzabschnitt 8'' zur Festlegung eines Schutztrichters 12 und einen Anschlußabschnitt 8''' zur Verbindung mit einem Stützring 13. Der Anschlußkappe 8 ist ferner ein Gleitring 9 zugeordnet, der geschlitzt ausgeführt ist und in einer Nut 10 der Gelenkgabel 4 des Kreuzgelenkes 2 zur Lagerung der Schutzvorrichtung einsitzt.

Der Schutztrichter 12 umfaßt zur Anschlußkappe 8 hin einen Faltenabschnitt 12', der mehrere Falten mit Faltenbergen und Faltentälern 12'' aufweist. Zur Gelenkgabel 3 hin besitzt der Schutztrichter 12 einen Abschnitt, der relativ steif ausgebildet ist. Der Faltenabschnitt 12' erlaubt ein Zusammendrücken des Schutztrichters 12 in Richtung auf die Anschlußkappe 8 zu, um so beispielsweise die Gelenkgabel 3 zugänglich zu machen und um diese beispielsweise an der Zapfwelle eines Traktors zur Erzielung einer drehfesten Verbindung festlegen zu können. Der Schutztrichter 12 arbeitet mit einem feststehenden Schutz, beispielsweise am Heck des Traktors zusammen, das heißt er wird von diesem teilweise überdeckt, so daß sich insgesamt ein abgeschlossener Raum ergibt, der nur durch gewillkürtes Zusammendrücken des Schutztrichters 12 zugänglich ist. Hierdurch wird ein Berührungsschutz gewährleistet.

Der Schutztrichter, der ja an sich verformbar sein soll, um die Zugänglichkeit zu den Gelenkbauteilen zu schaffen, muß trotzdem gewährleisten, daß, wenn beispielsweise die Bedienungsperson bei rotierender Gelenkwelle 1 auf den Schutz bzw. den Schutztrichter 12 aufsteigt oder sich in sonstiger Weise darauf abstützt, keine Beschädigung eintritt und die Schutzfunktion nicht gemindert wird.

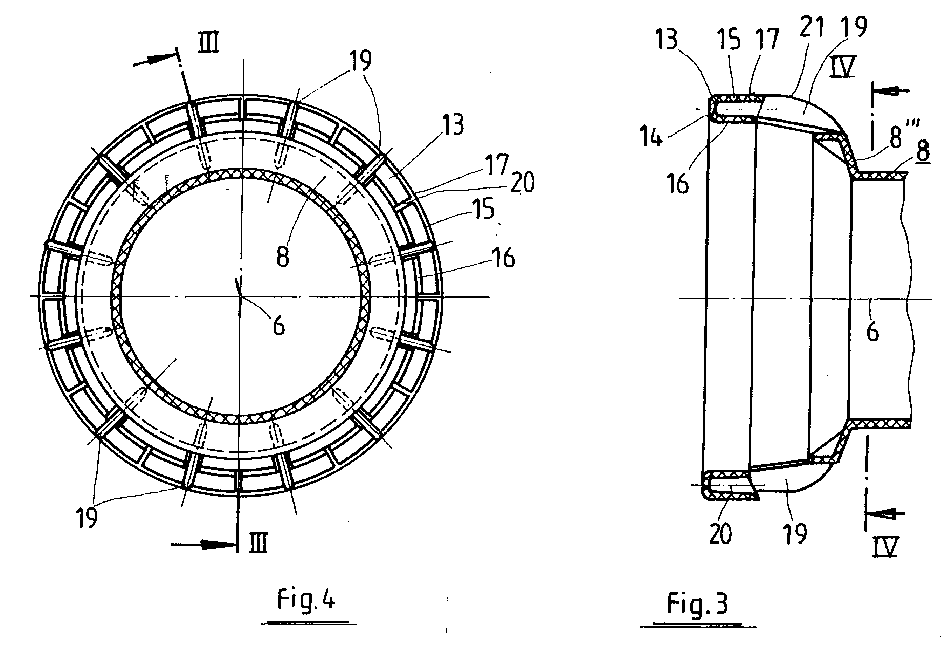

Aus diesem Grund ist an den Anschlußabschnitt 8''' der Anschlußkappe 8 mittels sich parallel zur Längsachse 6 erstreckender Speichen 19 ein Stützring 13 angeschlossen. Der Stützring 13 ist im axialen Abstand auf der Längsachse 6 von der Anschlußkappe 8 bzw. dem Gleitring 9 nach links in Richtung auf die weitere Gelenkgabel 3 zu versetzt. Wie den Figuren 3 und 4 zu entnehmen ist, ist die Anschlußkappe 8 im Anschlußabschnitt 8''' erweitert und auf der Innenseite, das heißt zur Längsachse 6 hin mit Verstärkungsrippen versehen. Von der Außenseite des Anschlußabschnittes 8''' gehen die umfangsverteilt angeordneten Speichen 19 aus, die im Stützring 13 enden. Der Stützring 13 ist als liegendes U-Profil gestaltet, dessen Öffnung zur Anschlußkappe 8 hin weist. Er besteht aus dem außen liegenden Schenkel 15, dem innen liegenden Schenkel 16 und dem beide verbindenden Steg 14. Die Außenfläche des Stützringes 13 ist mit 17 bezeichnet und dient zur Stützung des Schutztrichters 12. Ebenso die Außenkon-21 der Speichen 19. Die Speichen 19 sind in den Abschnitt des Stützringes 13 zwischen den beiden Schenkeln 15, 16 als Versteifungsrippen weitergeführt. Im übrigen sind zusätzliche Versteifungsstege 20 vorhanden, die sich ebenfalls zwischen dem Steg 14 und den beiden Schenkeln 15, 16 erstrecken und für eine Verbesserung der Festigkeit des Stützringes 13 sorgen. Die Versteifungsstege 20 sind auf dem Umfang des Stützringes 13 verteilt zwischen den Speichen 19 angeordnet. Die Anschlußkappe 8 bildet mit dem Stützring 13 und den beide verbindenden Speichen 19 ein einziges Bauteil, das als Spritzgußteil gestaltet ist und aus einem HDPE besteht.

Wie aus den Zeichnungsfiguren 1 und 2 hervorgeht, dienen die Außenfläche 17 des Stützringes 13 und die Außenkonturen 21 der Speichen 19 zur Abstützung der Innenseite 18 des Schutztrichters 12 insbesondere im Bereich des Faltenabschnittes 12', und zwar bevorzugt der Falten des Faltenabschnittes 12' unterhalb der Faltentäler 12''. Der Stützring 13 sorgt wirksam dafür, daß auch bei radialer Belastung, die auf den Schutztrichter 12 einwirkt, keine Berührung des Schutztrichters 12 mit dem von diesem umgebenen Gelenkbauteilen des Kreuzgelenkes 2 eintreten kann.

### Bezugszeichenliste

- 1: Gelenkwelle
- 2, 2': Kreuzgelenke
- 3, 4: Gelenkgabel
- 5: Zapfenkreuz
- 6: Längsachse
- 7: Verbindungswelle
- 7', 7'': Profilrohr
- 8: Anschlußkappe
- 8': Rohranschluß
- 8'': Sitzabschnitt
- 8''': Anschlußabschnitt
- 9: Gleitring
- 10: Nut
- 11, 11': Schutzrohre
- 12: Schutztrichter
- 12': Faltenabschnitt
- 12'': Faltental
- 13: Stützring
- 14: Steg
- 15, 16: Schenkel
- 17: Außenfläche
- 18: Innenseite
- 19: Speichen
- 20: Versteifungsstege
- 21: Außenkontur

## Patentansprüche

1. Schutzvorrichtung, die für eine Gelenkwelle bestimmt ist, die zwei Kreuzgelenke (2, 2'), die jeweils zwei Gelenkgabeln (3, 4) und ein beide gelenkig verbindendes Zapfenkreuz (5) umfassen, sowie eine beide Kreuzgelenke (2, 2') verbindende und entlang einer Längsachse (6) sich erstreckende Verbindungswelle (7) aufweist, umfassend zwei Anschlußkappen (8), die jeweils zur Festlegung eines Schutztrichters (12) einen Sitzabschnitt (8'') aufweisen und zur Aufnahme eines Gleitringes (9) dienen, der zur Lagerung auf einer Gelenkgabel (4) bestimmt ist, wobei der Schutztrichter (12) aus einem Kunststoff besteht und einen Abschnitt mit Falten aufweist, der dazu bestimmt ist, das Kreuzgelenk (2, 2') ausgehend von der Anschlußkappe (8) zumindest über einen Teil der Längenerstreckung zu überdecken, und wobei Stützmittel vorhanden sind, welche einer Einwirkung einer Belastung von außen auf den Schutztrichter (12) und damit einer Berührung des Schutztrichters (12) mit den umschlossenen Bauteilen des Kreuzgelenkes (2, 2') entgegenwirken.
dadurch gekennzeichnet,
daß der Schutztrichter (12) zur Anschlußkappe (8) hin einen Abschnitt (12') aufweist, der mit Falten versehen ist, daß die Stützmittel einen Stützring (13) umfassen, dessen Außenumfangsfläche (17) zur Stützung der Innenseite (18) der Faltentäler (12'') der Falten des Schutztrichters (12) dient, und
daß der Stützring (13) mit axialem Abstand auf der Längsachse (6) von der Anschlußkappe (8) weg versetzt angeordnet und an diese angeschlossen ist.

2. Schutzvorrichtung nach Anspruch 1,
dadurch gekennzeichnet,
daß der Stützring (13) mittels Speichen (19), die um die Längsachse (6) herum verteilt angeordnet sind, mit der Anschlußkappe (8) verbunden ist.

3. Schutzvorrichtung nach einem der Ansprüche 1 oder 2,
dadurch gekennzeichnet,
daß der Stützring (13) in einer Schnittebene, welche die Längsachse (6) enthält, mit einem Wandungsverlauf in Form eines liegenden U-Profils ausgebildet ist, und zwischen den Schenkeln (15, 16) und dem Steg (14) des U-Profils umfangsverteilt um die Längsachse (6) Versteifungsstege (20) angebracht sind.

4. Schutzvorrichtung nach Anspruch 3,
dadurch gekennzeichnet,
daß zumindest einige der Speichen (19) Versteifungsstege bilden.

5. Schutzvorrichtung nach Anspruch 2,
dadurch gekennzeichnet,
daß neben der Außenumfangsfläche (17) des Stützringes (13) auch ein Teil der Außenkontur (21) der Speichen (19) zur Stützung des Schutztrichters (12) dient.

6. Schutzvorrichtung nach Anspruch 1,
dadurch gekennzeichnet,
daß zusätzlich die Außenkontur der Speichen (19) zur Stützung der Innenseite (18) der Faltentäler (12'') der Falten dient.

7. Schutzvorrichtung nach einem der Ansprüche 2 bis 6,
dadurch gekennzeichnet,
daß der Stützring (13), die Speichen (19) und die Anschlußkappe (8) einstückig als Kunststoff-Spritzgußteil ausgebildet sind.

## Claims

1. A protective device intended for a driveshaft which is provided with two universal joints (2, 2') each comprising two joint yokes (3, 4) and a cross member (5) articulatably connecting said two joint yokes (3, 4), and with a connecting shaft (7) connecting the two universal joints (2, 2') and extending along a longitudinal axis (6), said protective device comprising two attaching caps (8) each comprising a seat portion (8'') for securing a protective cone (12) and for serving to receive a sliding ring (9), wherein the protective cone (12) consists of a plastic material and comprises a portion with folds which is intended to cover the universal joint (2, 2'), starting from the attaching cap (8) and including at least part of the longitudinal extension, and with there being provided supporting means which act against the effect of an external load on the protective cone (12) and thus against any contact between the protective cone (12) and the enclosed components of the universal joint (2, 2'),
characterised in
that, towards the attaching cap (8), the protective cone (12) comprises a portion (12') which is provided with folds,
that the supporting means comprise a supporting ring (13) whose outer circumferential face (17) serves to support the inside (18) of the fold valleys (12'') of the folds of the protective cone (12), and
that the supporting ring (13) is arranged on the longitudinal axis (6) so as to be offset from the attaching cap (8) at an axial distance therefrom and connected thereto.

2. A protective device according to claim 1,
characterised in
that the supporting ring (13) is connected to the connecting cap (8) by means of spokes (19) which are distributed around the longitudinal axis (6).

3. A protective device according to any one of claims 1 or 2,
characterised in
that, in a sectional plane containing the longitudinal axis (6), the supporting ring (13) is provided with a wall extending in the shape of a lying U-profile and that between the arms (15, 16) and the web (14) of the U-profile, there are arranged reinforcing webs (20) which are circumferentially distributed around the longitudinal axis (6).

4. A protective device according to claim 3,
characterised in
that at least some of the spokes (19) form reinforcing webs.

5. A protective device according to claim 2,
characterised in
that in addition to the outer circumferential face (17 of the supporting ring (13), part of the outer contour (21) of the spokes (19), too, serves to support the protective cone (12).

6. A protective device according to claim 1,
characterised in
that, additionally, the outer contour of the spokes (19) serves to support the inside (18) of the fold valleys (12'') of the folds.

7. A protective device according to any one of claims 2 to 6,
characterised in
that the supporting ring (13), the spokes (19) and the attaching cap (8) are injection-moulded in one piece from plastics.

## Revendications

1. Dispositif de protection, qui est destiné à un arbre de cardan, qui comporte deux joints de cardan (2, 2') qui comprennent deux fourches d'articulation (3, 4) et un croisillon (5) qui relie d'une manière articulée les deux fourches, ainsi qu'un arbre de liaison (7), qui relie les deux joints de cardan (2, 2') et s'étend le long d'un axe longitudinal (6), et comprenant deux capuchons de raccordement (8), qui possèdent chacun une partie formant siège (8") pour la fixation d'une tulipe de protection (12) et servent à loger une bague coulissante (9) qui est destinée à être supportée par une fourche d'articulation (4), et dans laquelle la tulipe de protection (12) est réalisée en matière plastique et comporte une partie pourvue de plis qui est destinée à recouvrir le joint de cardan (2, 2') sur au moins une partie de son étendue longitudinale à partir du capuchon de raccordement (8), et dans lequel des moyens d'appui sont prévus, qui s'opposent à l'action d'une charge appliquée de l'extérieur à la tulipe de protection (12) et par conséquent à un contact de la tulipe de protection (12) avec les composants renfermés du joint de cardan (2, 2'),
caractérisé en ce
que la tulipe de protection (12) possède, en direction de capuchon de raccordement (8), une partie (12'), qui est pourvue de plis, que les moyens d'appui comprennent une bague d'appui (13), dont la surface circonférentielle extérieure (17) est destinée à supporter le côté intérieur (18) des parties en creux (12") des plis de la tulipe de protection (12), et
que la bague d'appui (13) est disposée d'une manière décalée d'une certaine distance axiale sur l'axe longitudinal (6) par rapport au capuchon de raccordement (8) et est raccordée à ce dernier.

2. Dispositif de protection selon la revendication 1, caractérisé en ce
que la bague d'appui (13) est reliée au capuchon de raccordement (8) par des rayons (19), qui sont disposés d'une manière répartie autour de l'axe longitudinal (6).

3. Dispositif de protection selon l'une des revendications 1 et 2, caractérisé en ce
que la bague d'appui (13) porte, dans un plan de coupe qui contient l'axe longitudinal (6), une paroi ayant la configuration d'un profilé en U horizontal, et que des barrettes de renfort (20) sont montées en étant réparties circonférentiellement autour de l'axe longitudinal (6), entre les branches (15, 16) et la barrette (14) du profilé en U.

4. Dispositif de protection selon la revendication 3, caractérisé en ce
qu'au moins quelques-uns des rayons (19) forment des barrettes de renfort.

5. Dispositif de protection selon la revendication 2, caractérisé en ce
qu'en plus de la surface périphérique extérieure (17) de la bague d'appui (13), également une partie du contour extérieur (21) des rayons (19) est utilisée pour supporter la tulipe de protection (12).

6. Dispositif de protection selon la revendication 1, caractérisé en ce
qu'en outre le contour extérieur des rayons (19) sert à supporter le côté intérieur (18) des parties en creux (12") des plis.

7. Dispositif de protection selon l'une des revendications 2 à 6, caractérisé en ce
que la bague d'appui (13), les rayons (19) et le capuchon de raccordement (8) sont formés d'un seul tenant sous la forme d'une pièce en matière plastique moulée par injection.
